(19) Europäisches Patentamt
European Patent Office
Office européen des brevets

(11) **EP 2 886 211 B1**

(12) **EUROPÄISCHE PATENTSCHRIFT**

(45) Veröffentlichungstag und Bekanntmachung des Hinweises auf die Patenterteilung:
**13.10.2021 Patentblatt 2021/41**

(51) Int Cl.:
*B07B 7/083* (2006.01)    *B02C 17/16* (2006.01)
*B02C 17/18* (2006.01)    *F01D 11/08* (2006.01)

(21) Anmeldenummer: **14004299.5**

(22) Anmeldetag: **19.12.2014**

(54) **Maschine mit fliegend gelagertem Rotor**

Machine with cantilevered rotor

Machine dotée d'un rotor disposé en porte-à-faux

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.12.2013 DE 102013021757**

(43) Veröffentlichungstag der Anmeldung:
**24.06.2015 Patentblatt 2015/26**

(73) Patentinhaber:
• **NETZSCH Trockenmahltechnik GmbH**
  **95100 Selb (DE)**
• **Nied, Roland**
  **86486 Bonstetten (DE)**

(72) Erfinder:
• **Weiland, Dipl.-Ing.Lars-Peter**
  **95173 Schönwald (DE)**

• **Nied, Dr.Roland**
  **86486 Bonstetten (DE)**

(74) Vertreter: **Reichert & Lindner**
**Partnerschaft Patentanwälte**
**Kaflerstrasse 15**
**81241 München (DE)**

(56) Entgegenhaltungen:
**EP-A1- 0 504 836        EP-A1- 0 779 686**
**WO-A1-2011/047557    CN-U- 202 171 002**
**DE-C- 975 463          GB-A- 1 302 583**
**US-A1- 2006 001 939**

• **None**

**Beschreibung**

Die vorliegende Erfindung betrifft eine Maschine mit einem an einem Lager fliegend gelagerten Rotor, der eine Rotationsachse hat, längs der neben der Lagerung am Lager ein freies, im Weiteren ungelagertes Rotorende liegt, das eine Rotorstirnseite aufweist, die durch einen Spalt von einer feststehenden Rotorgegenseite beabstandet ist, nach Anspruch 1.

In vielen Maschinen und Apparaten der mechanischen Verfahrenstechnik besteht eine Aufgabe darin, die freie Rotorstirnseite an einem freien Rotorende eines fliegend gelagerten Rotors gegen eine Rotorgegenseite abzudichten, die z.B. Teil eines feststehenden Gehäuses ist, in dem der Rotor untergebracht ist. Hierzu wird üblicherweise zwischen dem Rotor und dem Gehäuse als Stator, d.h. zwischen der Rotorstirnseite und der Rotorgegenseite ein eng tolerierter, planparalleler Spalt gebildet, der vorzugsweise mit einem gasförmigen Fluid gespült wird. Dieser Spalt bildet eine berührungslose Dichtung zwischen einem in dem Gehäuse enthaltenen Arbeitsraum oder Bearbeitungsraum und einem Produktaustrag aus dem Gehäuse. Im Bereich des Lagers sind üblicherweise, aber nicht zwingend Antriebseinrichtungen zum Drehantrieb des Rotors zugeordnet.

Das Dokument EP-A1-0504836 offenbart eine Maschine mit einem an einem Lager fliegend gelagerten Rotor, der eine Rotationsachse hat, längs der vom Lager ausgehend ein freies, im Weiteren ungelagertes Rotorende verläuft, das eine Rotorstirnseite aufweist, die durch einen Spalt von einer feststehenden Rotorgegenseite beabstandet ist, und das im Betrieb der Maschine bei rotierendem Rotor bedingt durch Unwuchten des fliegend gelagerten Rotors, insbesondere des freien ungelagerten Rotorendes, oder durch von außen eingeleitete Kräfte gegenüber der Rotationsachse ausgelenkt wird, wobei die Rotorachse zumindest in ihrem Randbereich zu ihrem Rand und abfallend abgeschrägt ist.

Beim Beispiel eines Windsichters mit einem beschaufelten, rotierenden Sichterrad als freies Rotorende des fliegend gelagerten Rotors oder als Teil davon mit jedenfalls der freien Rotorstirnseite hat der Spalt insbesondere die Funktion, dass kein unklassiertes Aufgabegut in einen Produktaustrag in der Rotorgegenseite gelangen kann, durch den das abgetrennte Feingut den Arbeitsraum verlassen kann, in dem klassiert wird.

Bei einem weiteren Beispiel einer trocken betriebenen Rührwerkskugelmühle geht es darum, Mahlkörper am Austrag vom Mahlgutstrom zu trennen und im Mahlraum oder Bearbeitungsraum zurückzuhalten. Hierzu enthält das freie Rotorende des Rotors eine fliegend gelagerte Rührwelle mit einer wiederum beschaufelten Mahlkörpertrennvorrichtung, die die freie Rotorstirnseite enthält, die mit der Rotorgegenseite den Spalt zum gegenüberliegenden Gehäuseteil mit dem Produktaustrag in der Rotorgegenseite bildet.

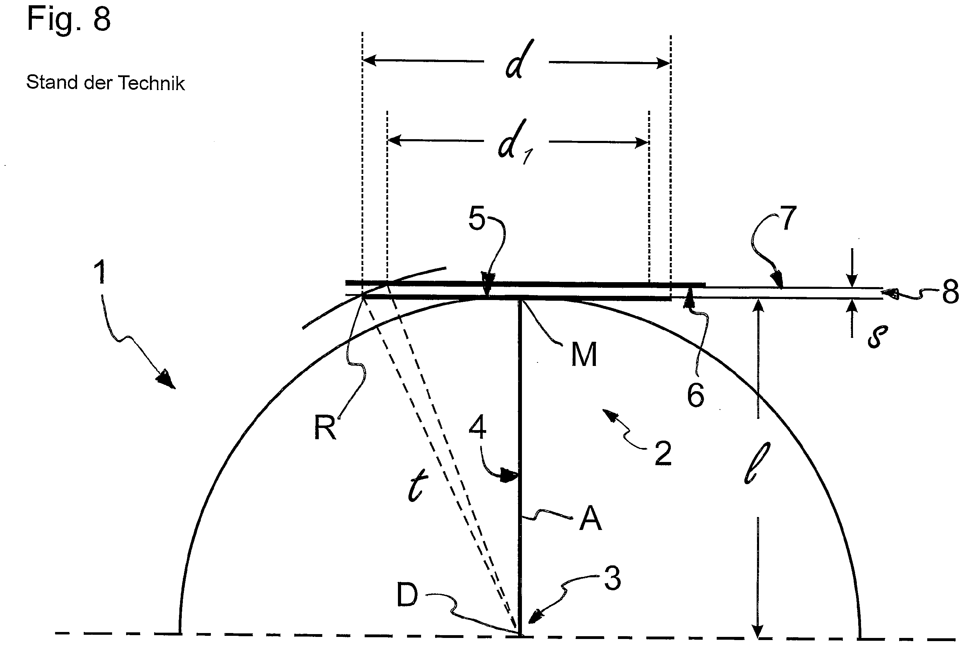

Rein schematisch und exemplarisch ist als solcher Stand der Technik in der Fig. 8 eine Maschine 1 mit ihren Komponenten und deren geometrischen Zusammenhängen verdeutlicht. Ein Rotor 2 der Maschine 1 ist an einem Lager 3 fliegend gelagert und hat ein freies Rotorende 4, das mit einer Rotorstirnseite 5 abschließt, die einen Durchmesser d hat. Vom Lager 3 bis zur Mitte M der Rotorstirnseite 5 ist die freie Länge 1 des freien Rotorendes 4 definiert. Gegenüber der Rotorstirnseite 5 ist eine feststehende Rotorgegenseite 6 als Teil eines Gehäuses 7 vorgesehen, das auch als Stator zu bezeichnen ist. Zwischen der Rotorstirnseite 5 und der Rotorgegenseite 6, die bei stehendem Rotor 2 planparallel sind, ist ein Spalt 8 mit einer Spaltbreite s gebildet, die nicht beliebig klein gewählt werden kann, wie es wünschenswert ist. Ferner nimmt mit der Größe des Spalts 8 auch die Größe eines an sich ungenutzten Spülgasvolumenstroms zu.

Im Betrieb wird das freie Rotorende 4 aufgrund von unvermeidlichen Unwuchten z.B. durch Ansatzbildung und Verschleiß Auslenkungen um seinen Drehpunkt D am Lager 3 erfahren. Betrachtet man das freie Rotorende 4 des Rotors 2 ggf. einschließlich eines darauf fixierten Rotorkörpers, der dann die Rotorstirnseite 5 enthält, mit der Länge 1 als biegesteif, so lässt sich das Maß der Auslenkung berechnen, bei dem der Rand R der Rotorstirnseite 5 des freien Rotorendes 4 mit ihrem Durchmesser d an der Rotorgegenseite 6 des Gehäuses oder Stators 7 anläuft. Unter Bezugnahme auf die schematische Verdeutlichung der Lagen und Relationen der einzelnen Elemente und Größen

1: Länge des freien Rotorendes 4 vom Lager 3 zur Mitte der Rotorstirnseite bei ruhendem Rotor 2 [mm]
d: Durchmesser der Rotorstirnseite 5 am freien Rotorende 4 [mm]
t: effektive Länge des freien Rotorendes 4 vom Lager 3 oder Drehpunkt D zum Rand R der Rotorstirnseite 4 [mm]

gemäß der Fig. 8 gilt

$$t = \sqrt{l^2 + \left(\frac{d}{2}\right)^2} \qquad\qquad (1)$$

Ferner ist
s: Spaltweite oder -breite zwischen der Rotorstirnseite 5 des freien Rotorendes 4 und der Rotorgegenseite 6 des feststehenden Gehäuses 7 [mm]

so dass der effektive Durchmesser $d_1$, mit dem der Rand R der Rotorstirnseite 5 am freien Rotorende 4 die stehende Rotorgegenseite 6, die z.B. eine Dichtscheibe sein kann, berührt, etwa wird zu

$$d_1 \approx \sqrt{t^2 - (l + s)^2} \qquad\qquad (2)$$

was unter folgenden Beispielsabmessungen

l = 850 mm
d = 238 mm
s = 0,5 mm
t = 858,3 mm
$d_1$ = 230,9 mm

bedeutet, dass der Rand R der Rotorstirnseite 5 am freien Rotorende 4, wie beispielsweise einer Welle, bei einem zur Verfügung stehenden Spalt von 0,5 mm bei einer Auslenkung um ca. +/- 3,5 mm an der Rotorgegenseite 6 des Gehäuses 7 anläuft, wie man aus (d - $d_1$)/2 erhält.

Ermittelt man die maximal auftretende Auslenkung eines gegebenen Rotors so kann auf diese Weise das minimale Spaltmaß bestimmt werden, das in der Praxis bei planparallelen Gestaltungen von Rotorstirnseite und Rotorgegenseite realisiert werden kann, um einen zuverlässigen Lauf des Rotors sicherzustellen. Wärmeausdehnung muss ggf. zusätzlich berücksichtigt werden.

Die vorliegende Erfindung hat und erreicht das Ziel, ein Anlaufen eines freien Rotorendes eines fliegend gelagerten Rotors einer Maschine an einer Gegenseite bei Auslenkungen des freien Rotorendes im Drehbetrieb des Rotors zu verhindern.

Dieses Ziel wird mit einer Maschine nach dem Anspruch 1 erreicht.

Erfindungsgemäß wird demnach eine Maschine geschaffen, mit einem an einem Lager fliegend gelagerten Rotor, der eine Rotationsachse hat, längs der vom Lager ausgehend ein freies, im Weiteren ungelagertes Rotorende verläuft, das eine Rotorstirnseite aufweist, die durch einen Spalt von einer feststehenden Rotorgegenseite der Maschine beabstandet ist, und das im Betrieb der Maschine bei rotierendem Rotor bedingt durch Unwuchten des fliegend gelagerten Rotors, insbesondere des freien ungelagerten Rotorendes, oder durch von außen eingeleitete Kräfte gegenüber der Rotationsachse ausgelenkt wird, wobei die Rotorstirnseite zumindest in ihrem Randbereich zu ihrem Rand hin und in Richtung zum Lager abfallend gekrümmt oder abgeschrägt ist, und Einrichtungen zum Spülen des Spalts mit einem gasförmigen Fluid enthalten sind.

Unwuchten des fliegend gelagerten Rotors, insbesondere des freien ungelagerten Rotorendes können einerseits grundsätzlich bauartbedingt vorhanden sein, aber auch im Betrieb entstehen, wie beispielswiese durch Ansatzbildung insbesondere an dem freien ungelagerten Rotorende und Verschleiß insbesondere des freien ungelagerten Rotorendes, aber auch im axialen Verlauf des fliegend gelagerten Rotors.

Mit von außen eingeleiteten Kräften sind Kräfte gemeint, die z.B. durch den Aufprall von Körpern, wie beispielsweise Mahlkörpern, oder das zeitweise Andrücken von weiteren Maschinenkomponenten, wie u.a. Bremsbacken oder Schleifkontakten, gegen den fliegend gelagerten Rotor und insbesondere das freie ungelagerte Rotorende auf den fliegend gelagerten Rotor und insbesondere das freie ungelagerte Rotorende wirken und eine Auslenkung des fliegend gelagerten Rotors und insbesondere des freien ungelagerten Rotorendes erzeugen. Grundsätzlich sind damit Fälle betroffen, in denen es zu einer Auslenkung des fliegend gelagerten Rotors und insbesondere des freien ungelagerten Rotorendes gegenüber der Rotationsachse des fliegend gelagerten Rotors kommt, so dass das freie ungelagerte Rotorende gegenüber der Rotationsachse ausgelenkt wird und in Abhängigkeit von der Größe dieser Auslenkung aufgrund seiner radialen Ausdehnung und den Dimensionen des Spalts, bezüglich dem davon ausgegangen wird, dass er so schmal wie möglich gehalten werden soll, wie z.B. im Fall eines Dichtspalts, jedenfalls an seinem freien Rand der Rotorstirnseite in Kontakt mit der Rotorgegenseite kommen kann, was zu einem Schaden bis hin zu Ausfall der Maschine führen kann.

Es ist bevorzugt, wenn die Rotorgegenseite Bestandteil eines Gehäuses ist.

Bei einer weiteren vorzugsweise Ausgestaltung kann vorgesehen sein, dass die Rotorgegenseite eine Materialauslassöffnung gegenüber der Rotorstirnseite enthält, und dass der Spalt zwischen der Rotorstirnseite und der Rotorgegenseite in der Umgebung der Materialauslassöffnung ein Dichtspalt ist.

Mit Vorzug kann ferner vorgesehen sein, dass die Rotorstirnseite kegelstumpf-, kegel-oder kalottenförmig ausgebildet ist.

Weitere bevorzugte Ausgestaltungen bestehen darin, dass die Rotorgegenseite analog zur Rotorstirnseite so geformt ist, so dass der Spalt zumindest im Wesentlichen eine konstante Breite hat, insbesondere auch dann, wenn das ungelagerte freie Rotorende im Betrieb der Maschine bei rotierendem Rotor bedingt durch von Unwuchten des fliegend gelagerten Rotors, insbesondere des freien ungelagerten Rotorendes, oder durch von außen eingeleitete Kräfte gegenüber der Rotationsachse ausgelenkt wird, oder dass der Spalt am Rand eine größere Breite als an der Mitte der Rotorstirnseite hat.

Alternativ kann vorzugsweise vorgesehen sein, dass die Rotorstirnseite konvex sphärisch ausgebildet ist, dass das freie Rotorende bei ruhendem Rotor vom Lager aus bis zur Mitte der Rotorstirnseite gemessen eine freie axiale Länge 1 hat, und dass die konvex sphärische Rotorstirnseite einen Radius hat, der gleich der freien axialen Länge 1 des freien Rotorendes ist, oder dass die Rotorstirnseite konvex sphärisch ausgebildet ist, und dass die konvex sphärische Rotorstirnseite am Rand einen kleineren Radius als in der Mitte hat.

Die vorstehenden Varianten können mit Vorzug dadurch weiter ausgebildet sein, dass die der Rotorstirnseite gegenüberliegende Rotorgegenseite konkav sphärisch ausgebildet ist. Diese Gestaltung kann ferner dadurch weitergebildet sein, dass das freie Rotorende bei ruhendem Rotor vom Lager aus bis zur Mitte der Rotorstirnseite gemessen eine freie axiale Länge 1 hat, und dass die konkav sphärische Rotorgegenseite einen Radius hat, der gleich der freien axialen Länge 1 zuzüglich der Breite s des Spalts bei ruhendem Rotor an der Mitte der Rotorstirnseite gemessen ist, oder dass das freie Rotorende bei ruhendem Rotor vom Lager aus bis zur Mitte der Rotorstirnseite gemessen eine freie axiale Länge 1 hat, und dass der Radius der konkav sphärischen Rotorgegenseite zumindest gegenüber einem Randbereich der Rotorstirnseite größer als die freie axiale Länge 1 zuzüglich der Breite s des Spalts bei ruhendem Rotor an der Mitte der Rotorstirnseite gemessen ist.

Eine andere bevorzugte Ausgestaltung besteht darin, dass die Maschine ein Windsichter ist, dass der Rotor ein beschaufeltes Sichterrad enthält, und dass das Sichterrad am freien Rotorende gebildet oder angeordnet ist und die Rotorstirnseite enthält.

Alternativ kann vorzugsweise vorgesehen sein, dass die Maschine eine Mühle, insbesondere eine Rührwerkskugelmühle ist, dass der Rotor eine Trennvorrichtung, insbesondere eine Mahlkörpertrennvorrichtung und/oder einen beschaufelten Rotorkörper enthält, und dass die Trennvorrichtung oder Mahlkörpertrennvorrichtung oder der beschaufelte Rotorkörper am freien Rotorende gebildet oder angeordnet ist und die Rotorstirnseite enthält.

Weiterhin ist es bevorzugt, wenn der Spalt bei ruhendem Rotor an der Mitte der Rotorstirnseite gemessen eine Breite von kleiner oder gleich 1 mm, insbesondere von kleiner oder gleich 0,5 mm hat.

Erfindungsgemäß sind Einrichtungen zum Spülen des Spalts, insbesondere Dichtspalts, mit einem gasförmigen Fluid enthalten.

Die Erfindung wird anhand von Ausführungsbeispielen nachfolgend unter Bezugnahme auf die Zeichnung lediglich exemplarisch näher erläutert, in der

Fig. 1    in einer schematischen auszugsweisen Schnittansicht ein erstes Ausführungsbeispiel einer Maschine mit einem fliegend gelagerten Rotor veranschaulicht,

Fig. 2    in einer schematischen auszugsweisen Schnittansicht ein zweites Ausführungsbeispiel einer Maschine mit einem fliegend gelagerten Rotor veranschaulicht,

Fig. 3    in einer auszugsweisen schematischen Schnittansicht ein drittes Ausführungsbeispiel einer Maschine mit einem fliegend gelagerten Rotor veranschaulicht,

Fig. 4    in einer schematischen Schnittansicht ein viertes Ausführungsbeispiel einer Maschine mit einem fliegend gelagerten Rotor veranschaulicht,

Fig. 5    in einer vergrößerten schematischen Schnittansicht einen wesentlichen Teil des vierten Ausführungsbeispiels einer Maschine mit einem fliegend gelagerten Rotor aus der Fig. 4 veranschaulicht,

Fig. 6    in einer schematischen Schnittansicht ein fünftes Ausführungsbeispiel einer Maschine mit einem fliegend gelagerten Rotor veranschaulicht,

Fig. 7    in einer schematischen Schnittansicht ein sechstes Ausführungsbeispiel einer Maschine mit einem fliegend gelagerten Rotor veranschaulicht, und

Fig. 8    in einer Schemadarstellung den Stand der Technik einer Maschine mit einem fliegend gelagerten Rotor veranschaulicht.

Anhand der nachfolgend beschriebenen und in den Zeichnungen dargestellten Ausführungs- und Anwendungsbeispiele wird die Offenbarung lediglich exemplarisch näher erläutert, d.h. sie ist nicht auf diese Ausführungs- und Anwendungsbeispiele beschränkt. Verfahrens- und Vorrichtungsmerkmale ergeben sich jeweils analog auch aus Vorrichtungs- bzw. Verfahrensbeschreibungen.

Gleiche Bezugszeichen in den einzelnen Figuren und Abbildungen der Zeichnung bezeichnen gleiche oder ähnliche oder gleich oder ähnlich wirkende Komponenten. Anhand der Darstellungen in der Zeichnung werden auch solche Merkmale deutlich, die nicht mit Bezugszeichen versehen sind, unabhängig davon, ob solche Merkmale nachfolgend beschrieben sind oder nicht. Andererseits sind auch Merkmale, die in der vorliegenden Beschreibung enthalten, aber nicht in der Zeichnung sichtbar oder dargestellt sind, ohne weiteres für einen Fachmann verständlich.

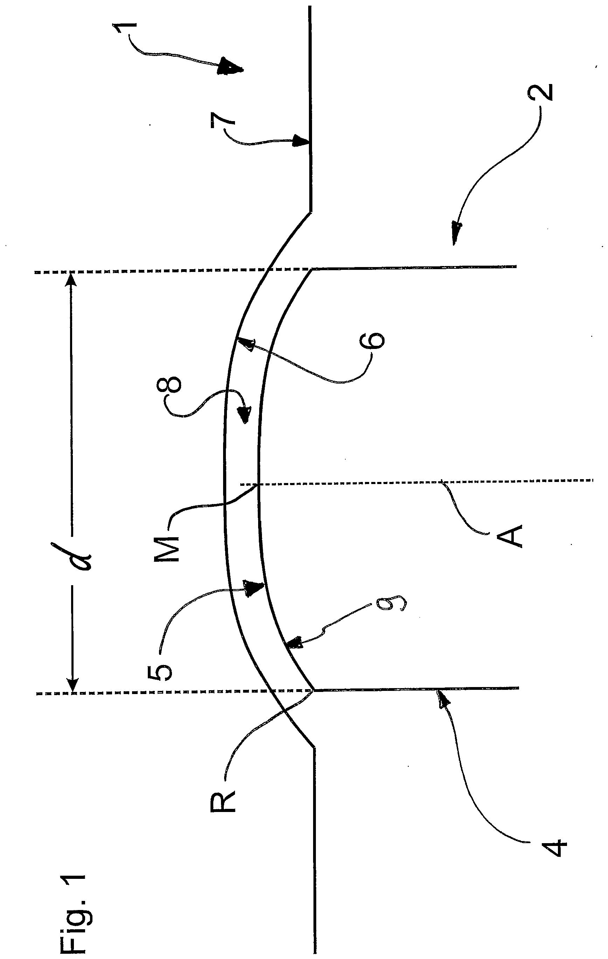

In der Fig. 1 ist exemplarisch in einer schematischen auszugsweisen Schnittansicht ein erstes Ausführungsbeispiel einer Maschine 1 mit einem fliegend gelagerten Rotor 2 veranschaulicht. Der Rotor 2 hat eine Rotationsachse A und ist an einem Lager 3 fliegend gelagert, von dem aus längs der Rotationsachse A ein freies, im Weiteren ungelagertes Rotorende 4 definiert ist. Die Länge 1 des freien Rotorendes 4 geht von dem durch das Lager 3 bestimmten Drehpunkt und reicht bis zur Rotorstirnseite 5, die das freie Rotorende 4 des Rotors 2 entgegengesetzt zum Lager 3 abschließt und einen Durchmesser d hat. Im Betrieb wird das sich bei drehendem Rotor 2 entsprechend drehende freie Rotorende 4 aufgrund von unvermeidlichen Unwuchten des fliegend gelagerten Rotors 2 allgemein und des sich entsprechend mitdrehenden freien ungelagerten Rotorendes 4 z.B. durch Ansatzbildung und Verschleiß Auslenkungen gegenüber der Rotationsachse (A) oder anders ausgedrückt um seinen Drehpunkt D (vergleiche Fig. 8) am Lager 3 (vergleiche Fig. 8) erfahren.

Zu solchen Auslenkungen kann es im Betrieb alternativ oder zusätzlich auch durch von außen eingeleitete Kräften kommen, bei denen es sich um Kräfte handelt, die z.B. durch den Aufprall von Körpern, wie beispielsweise bewegten Mahlkörpern, oder das zeitweise Andrücken von weiteren Maschinenkomponenten, wie u.a. Bremsbacken oder Schleifkontakten, gegen den fliegend gelagerten Rotor 2 und insbesondere das freie ungelagerte Rotorende 4 auf den fliegend gelagerten Rotor 2 und insbesondere das freie ungelagerte Rotorende 4 wirken und eine Auslenkung des fliegend gelagerten Rotors 2 und insbesondere des freien ungelagerten Rotorendes 4 erzeugen. Grundsätzlich sind damit Fälle betroffen, in denen es zu einer Auslenkung des fliegend gelagerten Rotors 2 und insbesondere des freien ungelagerten Rotorendes 4 gegenüber der Rotationsachse A des fliegend gelagerten Rotors 2 kommt, so dass das freie ungelagerte Rotorende 4 gegenüber der Rotationsachse A ausgelenkt wird.

Gegenüber der Rotorstirnseite 5 befindet sich eine feststehenden Rotorgegenseite 6 eines Gehäuses 7, das in Bezug auf den Rotor 2 damit einen Stator darstellt. Zwischen der Rotorstirnseite 5 und der Rotorgegenseite 6 befindet sich ein Spalt 8. Wie in der Fig. 1 deutlich zu erkennen ist, ist die Rotorstirnseite 5 von ihrer Mitte M aus betrachtet in einem Randbereich 9 zu ihrem Rand R hin abfallend gekrümmt oder abgeschrägt. Diese Krümmung oder Abschrägung kann auch über den gesamten Radius, d.h. von der Mitte M bis zum Rand R der Rotorstirnseite 5 ausgebildet sein. Wesentlich ist, dass quasi der Rand R der Rotorstirnseite 5 in Richtung zum Lager 3 des Rotors 2 hin zurückgezogen ist. Dadurch wird auf geschickte und einfache sowie zuverlässige Weise ein Freiraum für den Rand R der Rotorstirnseite 5 geschaffen, wenn das freie Rotorende 4 aufgrund von unvermeidlichen Unwuchten z.B. durch Ansatzbildung und Verschleiß im Betrieb des Rotors 2 Auslenkungen um seinen Drehpunkt D am Lager 3 erfährt.

D.h., dass in Abhängigkeit von der Größe der betriebsbedingten Auslenkung des fliegend gelagerten Rotors 2 und insbesondere des freien ungelagerten Rotorendes 4 aufgrund der radialen Ausdehnung des letzteren und den Dimensionen des Spalts 8, bezüglich dem davon ausgegangen wird, dass er so schmal wie möglich gehalten werden soll, wie z.B. im Fall eines Dichtspalts, jedenfalls an seinem freien Rand R der Rotorstirnseite 5 in Kontakt mit der Rotorgegenseite 6 kommen kann, was zu einem Schaden bis hin zu Ausfall der Maschine 1 führen kann.

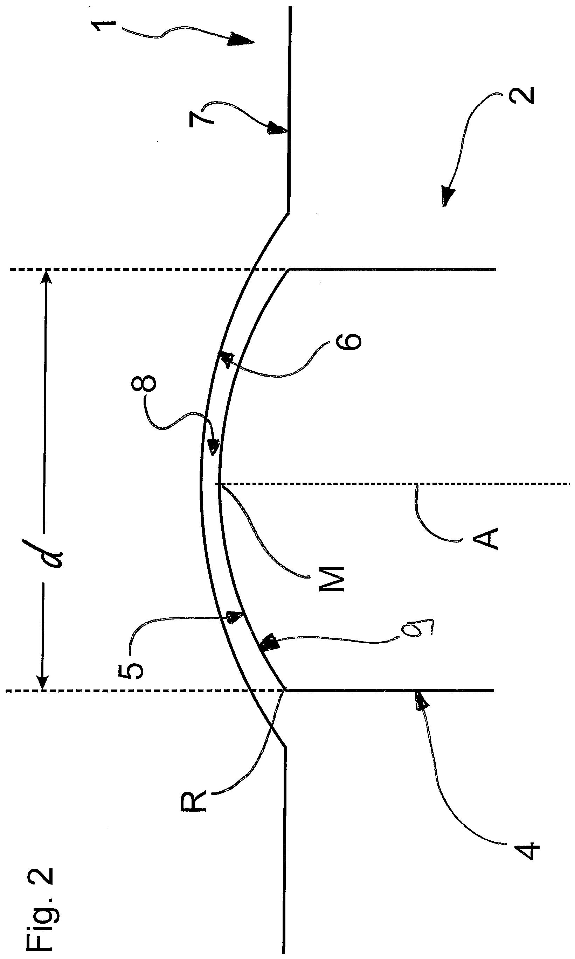

Die Rotorstirnseite 5 ist bei diesem ersten Ausführungsbeispiel kegelstumpf- oder kalottenförmig ausgebildet, so dass auch der Spalt 8 als kalottenförmig bezeichnet werden kann. Die Rotorgegenseite 6 ist analog zur Rotorstirnseite 5 geformt, so dass der Spalt 8 zumindest im Wesentlichen eine konstante Breite s hat, wie sie gemäß der Fig. 8 festgelegt ist. Die Rotorstirnseite 5 und die Rotorgegenseite 6 können auch kegelförmig oder konvex bzw. konkav sein, wie insbesondere beim zweiten Ausführungsbeispiel gemäß der Fig. 2 zu sehen und realisiert ist.

Bei dem in der Fig. 2 schematisch in einem Schnitt gezeigten zweiten Ausführungsbeispiel einer Maschine 1 mit einem fliegend gelagerten Rotor 2 sind gleiche Komponenten wie beim ersten Ausführungsbeispiel gemäß der Fig. 1 mit denselben Bezugszeichen versehen und werden, soweit sie identisch sind, zur Vermeidung von bloßen Wiederholungen im Zusammenhang mit der Fig. 2 nicht nochmals beschrieben. Es wird insofern vollumfänglich auf die Beschreibung zur Fig. 1 Bezug genommen und Einzelheiten des zweiten Ausführungsbeispiels gemäß der Fig. 2 werden nachfolgend nur erläutert, sofern und soweit sie sich vom ersten Ausführungsbeispiel gemäß der Fig. 1 unterscheiden.

Beim zweiten Ausführungsbeispiel gemäß der Fig. 2 ist die Rotorstirnseite 5 konvex sphärisch ausgebildet. Das freie Rotorende 4 hat bei ruhendem Rotor 2 vom Lager 3 aus bis zur Mitte M der Rotorstirnseite 5 gemessen eine freie axiale Länge 1, wie in der Fig. 8 verdeutlicht ist. Der Radius der konvex sphärischen Rotorstirnseite 5 ist gleich der freien axialen Länge 1 des freien Rotorendes 4 ist (vergleiche Fig. 8). Statt eines konstanten Radius über die gesamte Fläche der Rotorstirnseite 5 kann auch vorgesehen sein, dass die konvex sphärische Rotorstirnseite 5 am Rand R einen kleineren Radius als in der Mitte M hat.

Auch die der Rotorstirnseite 5 gegenüberliegende Rotorgegenseite 6 ist beim zweiten Ausführungsbeispiel gemäß der Fig. 2 konkav sphärisch ausgebildet. Wie auch der schematischen Schnittdarstellung der Fig. 2 deutlich zu entnehmen ist, ist die Spaltbreite s (vergleiche Fig. 8) des Spalts 8 im Randbereich 9 der Rotorstirnseite 5 größer als bei der Mitte M der Rotorstirnseite 5. Bei der Mitte M der Rotorstirnseite 5 ist damit beim zweiten Ausführungsbeispiel gemäß der Fig. 2 die Breite oder Weite s (vergleiche Fig. 8) des Spalts 8 minimal und wird zum Rand R der Rotorstirnseite 5 hin größer. Die kann beispielsweise und bevorzugt dadurch realisiert sein, dass der Radius der konkav sphärischen Rotorgegenseite 6 zumindest gegenüber dem Randbereich 9 der Rotorstirnseite 5 größer als die freie axiale Länge 1 zuzüglich der minimalen Breite s des Spalts 8, bei ruhendem Rotor 2 an der Mitte M der Rotorstirnseite 5 gemessen, ist. Anders ausgedrückt hat bei dieser Ausgestaltung der Spalt 8 am Rand R der Rotorstirnseite 5 eine größere Breite als an der Mitte M der Rotorstirnseite 5.

Aber auch bei der konvex-konkaven Paarung von Rotorstirnseite 5 und Rotorgegenseite 6 kann vorgesehen sein, dass das freie Rotorende 4 bei ruhendem Rotor 2 vom Lager 3 aus bis zur Mitte M der Rotorstirnseite 5 gemessen eine freie axiale Länge 1 hat, die den Radius der konvex sphärischen Ausbildung der Rotorstirnseite 5 bestimmt, und dass die konkav sphärische Rotorgegenseite 6 einen Radius hat, der gleich der freien axialen Länge 1 zuzüglich der Breite s (vergleiche Fig. 8) des Spalts 8 bei ruhendem Rotor 2 an der Mitte M der Rotorstirnseite 5 gemessen ist. Das bedeutet, dass der Spalt 8 beim zweiten Ausführungsbeispiel gemäß der Fig. 2, d.h. auch bei der konvex-konkaven Paarung von Rotorstirnseite 5 und Rotorgegenseite 6, analog zum ersten Ausführungsbeispiel gemäß der Fig. 1 zumindest im Wesentlichen eine konstante Breite s haben kann, wie sie gemäß der Fig. 8 festgelegt ist. In anderen Worten kann auch bei der konvex-konkaven Paarung von Rotorstirnseite 5 und Rotorgegenseite 6 die Rotorgegenseite 6 analog zur Rotorstirnseite 5 geformt sein, so dass ein Spalt 8 mit zumindest im Wesentlichen konstanter Breite s (vergleiche Fig. 8) gebildet ist.

Auch bei der konvex-konkaven Paarung von Rotorstirnseite 5 und Rotorgegenseite 6 kann von einer kalottenförmigen Ausgestaltung dieser Seiten und damit auch des Spaltes gesprochen werden.

Somit wird auch bei den Gestaltungen und Gestaltungsmöglichkeiten gemäß dem zweiten Ausführungsbeispiel gemäß der Fig. 2 auf geschickte und einfache sowie zuverlässige Weise ein Freiraum für den Rand R der Rotorstirnseite 5 geschaffen, wenn das freie Rotorende 4 aufgrund von unvermeidlichen Unwuchten z.B. durch Ansatzbildung und Verschleiß im Betrieb des Rotors 2 Auslenkungen um seinen Drehpunkt D am Lager 3 erfährt.

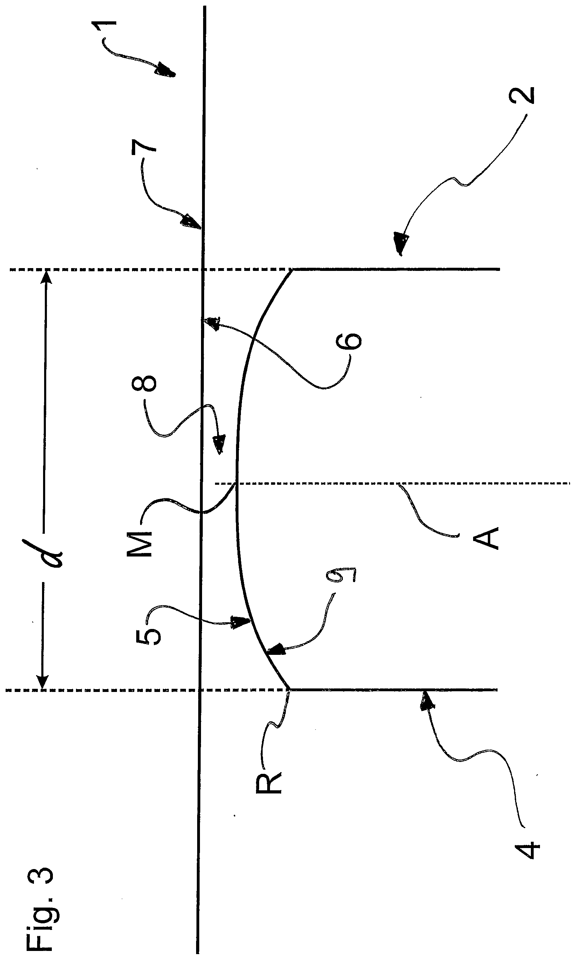

Bei dem in der Fig. 3 schematisch in einem Schnitt gezeigten dritten Ausführungsbeispiel einer Maschine 1 mit einem fliegend gelagerten Rotor 2 sind gleiche Komponenten wie beim ersten und zweiten Ausführungsbeispiel gemäß den Fig. 1 und 2 mit denselben Bezugszeichen versehen und werden, soweit sie identisch sind, zur Vermeidung von bloßen Wiederholungen im Zusammenhang mit der Fig. 3 nicht nochmals beschrieben. Es wird insofern vollumfänglich auf die Beschreibungen zu den Fig. 1 und 2 Bezug genommen und Einzelheiten des dritten Ausführungsbeispiels gemäß der Fig. 3 werden nachfolgend nur erläutert, sofern und soweit sie sich vom ersten und vom zweiten Ausführungsbeispiel gemäß der Fig. 1 bzw. der Fig. 2 unterscheiden.

Beim dritten Ausführungsbeispiel gemäß der Fig. 3 ist die Ausgestaltung der Rotorstirnseite 5 identisch mit der Ausgestaltung der Rotorstirnseite 5 beim ersten Ausführungsbeispiel gemäß der Fig. 1. Allerdings ist, die in der Fig. 3 sehr gut zu erkennen ist, die Rotorgegenseite 6 eine ebene Fläche ohne gekrümmte oder abgeschrägte Bereiche. Im Unterschied zum ersten Ausführungsbeispiel gemäß der Fig. 1, aber analog zum zweiten Ausführungsbeispiel gemäß der Fig. 2 hat bei dieser Ausgestaltung des dritten Ausführungsbeispiels gemäß der Fig. 3 der Spalt 8 am Rand R der Rotorstirnseite 5 eine größere Breite als an der Mitte M der Rotorstirnseite 5. Die Breite s nimmt insbesondere im Randbereich 9 der Rotorstirnseite 5 zum Rand R hin zu.

Auch wenn in der Fig. 3 von der Rotorstirnseite 5 eine Form gezeigt ist, die von der Mitte M der Rotorstirnseite 5 ausgehend zunächst parallel zur Rotorgegenseite 6 verläuft und erst im Randbereich 9 zum Rand R hin in Richtung zum Lager 3 (vergleiche Fig. 8) gekrümmt ist, kann auch mit einer Rotorgegenseite 6 in Form einer ebenen Fläche eine konvex sphärische Rotorstirnseite 5 kombiniert werden.

Somit wird auch bei den Gestaltungen und Gestaltungsmöglichkeiten gemäß dem dritten Ausführungsbeispiel gemäß der Fig. 3 auf geschickte und einfache sowie zuverlässige Weise ein Freiraum für den Rand R der Rotorstirnseite 5 geschaffen, wenn das freie Rotorende 4 aufgrund von unvermeidlichen Unwuchten z.B. durch Ansatzbildung und Verschleiß im Betrieb des Rotors 2 Auslenkungen um seinen Drehpunkt D am Lager 3 erfährt.

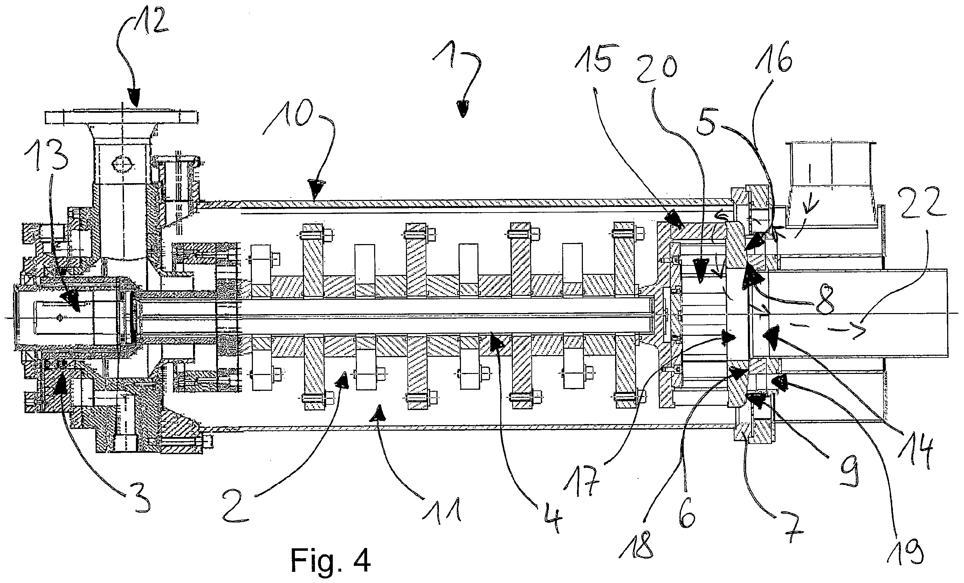

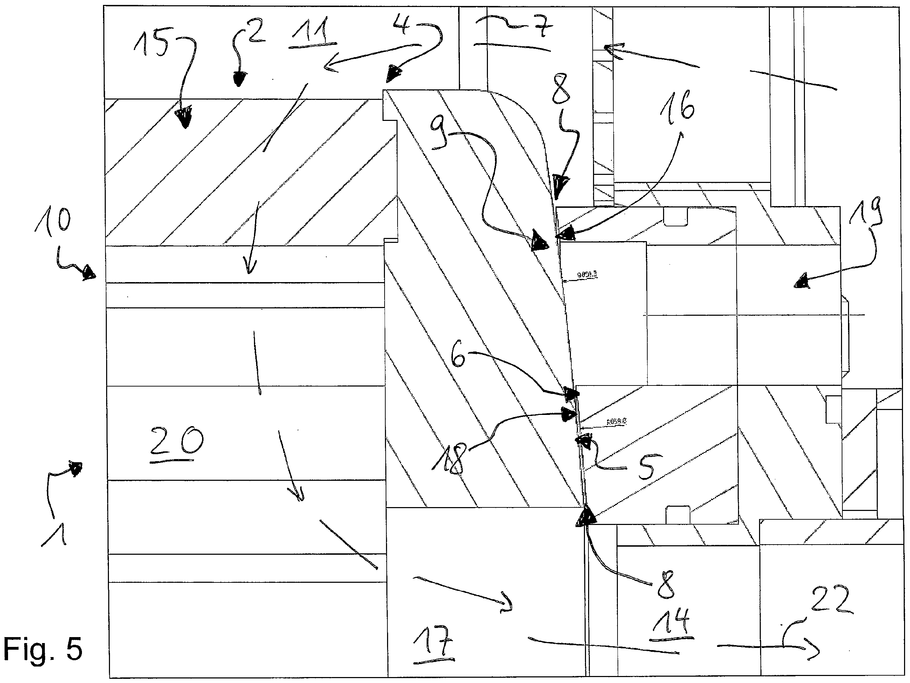

Sämtliche im Zusammenhang mit den ersten, zweiten und dritten Ausführungsbeispielen gemäß den Fig. 1 bis 3 gezeigten und erläuterten Ausgestaltungen und Varianten lassen sich bei der Maschine 1 des vierten Ausführungsbeispiels gemäß den Fig. 4 und 5 realisieren, auch wenn hier eine weitere Paarung von Formen der Rotorstirnseite 5 und der Rotorgegenseite 6 zu Anschauungszwecken gewählt wurde.

Bei dem in den Fig. 4 und 5 schematisch gezeigten vierten Ausführungsbeispiel einer Maschine 1 mit einem fliegend gelagerten Rotor 2 sind gleiche Komponenten wie bei den ersten bis dritten Ausführungsbeispielen gemäß den Fig. 1 bis 3 mit denselben Bezugszeichen versehen und werden, soweit sie identisch sind, zur Vermeidung von bloßen Wiederholungen im Zusammenhang mit den Fig. 4 und 5 nicht nochmals beschrieben. Es wird insofern vollumfänglich auf die Beschreibungen zu den Fig. 1 bis 3 Bezug genommen und Einzelheiten des vierten Ausführungsbeispiels gemäß den Fig. 4 und 5 werden nachfolgend nur erläutert, sofern und soweit sie sich von den ersten bis dritten Ausführungsbeispielen gemäß den Fig. 1 bis 3 unterscheiden.

Bei der Maschine 1 gemäß dem vierten Ausführungsbeispiel, das in den Fig. 4 und 5 gezeigt und nachfolgend erläutert wird, handelt es sich um eine Mühle und genauer um eine Rührwerkskugelmühle 10. In dem Gehäuse oder Stator 7 der Rührwerkskugelmühle 10 ist ein Rotor 2 an einem Lager 3 fliegend gelagert, das einen Drehpunkt D bildet, um den im Betrieb der Rührwerkskugelmühle 10 bei Rotation des Rotors 2 dessen freies Rotorende 4 aufgrund von unvermeidlichen Unwuchten z.B. durch Ansatzbildung und Verschleiß Auslenkungen erfährt.

Die Rotorgegenseite 6 ist Bestandteil des Gehäuses 7, das einen Bearbeitungsraum 11 umgibt, in dem das freie Rotorende 4 des Rotors 2 angeordnet ist. In üblicher Weise enthält die Rührwerkskugelmühle 10 einen Mahlguteinlass 12 sowie Antriebseinrichtungen 13 zum Drehantrieb des Rotors 2, wobei die Antriebseinrichtungen 13 auf der dem freien Rotorende 4 abgewandten anderen Seite des Lagers 3 angeordneten Seite platziert sind. Auf Einzelheiten von Mühlen und insbesondere Rührwerkskugelmühlen im Zusammenhang mit dem Mahlvorgang wird hier nicht eingegangen, da davon ausgegangen wird, dass diese Einzelheiten für verschiedene Mühlengestaltungen und Betriebsvarianten dem Fachmann bekannt sind und da solche die Mahlung betreffenden Einzelheiten zur vorliegenden Erfindung nicht beitragen.

Für Ausführungsbeispiele der vorliegenden Erfindung, wie das vierte Ausführungsbeispiel gemäß den Fig. 4 und 5 noch relevant ist, dass die Rotorgegenseite 6 eine Materialauslassöffnung 14 gegenüber der Rotorstirnseite 5 aufweist und der Spalt 8 zwischen der Rotorstirnseite 5 und der Rotorgegenseite 6 in der Umgebung der Materialauslassöffnung 12 ein Dichtspalt ist. Weiterhin von den Maßgaben der vorliegenden Erfindung betroffen ist, dass der Rotor 2 eine Trennvorrichtung 15, insbesondere eine Mahlkörpertrennvorrichtung enthält. Die Trennvorrichtung 15 befindet sich am freien Ende des freien Rotorendes 4 und enthält die Rotorstirnseite 5, die die Trennvorrichtung 15 zur Rotorgegenseite 6 des Gehäuses 7 mit der Materialauslassöffnung 14 hin abschließt.

Wie die Darstellungen des vierten Ausführungsbeispiels in den Fig. 4 und 5 erkennen lassen, ist die Rotorstirnseite 5 durch eine Stirnringfläche 16 gebildet, die eine Stirndurchlassöffnung 17 der Trennvorrichtung 15 umgibt. Analog zu der Stirnringfläche 16 der Rotorstirnseite 5 weist die Rotorgegenseite 6 eine Gegenringfläche 18 auf, die die Materialauslassöffnung 14 in der Rotorgegenseite 6 umgibt. Die Stirnringfläche 16 ist eine Kegelstumpfmantelfläche mit dem kleineren Umfang zur Rotorgegenseite 6 hin gewandt, die als Gegenringfläche 18 eine zumindest im Wesentlichen zur Stirnringfläche 16 gleichgeformte Kegelstumpfmantelfläche ist, so dass zwischen der Stirnringfläche 16 der Rotorstirnseite 5 und der Gegenringfläche 18 der Rotorgegenseite 6 der Spalt 8 gebildet ist.

In den Fig. 4 und 5 ist erfindungsgemäß gezeigt, dass Einrichtungen 19 zum Spülen, des Spalts 8, der bei dem vierten Ausführungsbeispiel ein Dichtspalt ist, mit einem gasförmigen Fluid enthalten sind.

Die Trennvorrichtung 15 kann durch einen beschaufelten Rotorkörper gebildet oder ergänzt (nicht gezeigt) werden.

Auch die Ausgestaltung des vierten Ausführungsbeispiels gemäß den Fig. 4 und 5 ermöglicht auf geschickte und einfache sowie zuverlässige Weise einen Freiraum für den Rand R der Rotorstirnseite 5, wenn das freie Rotorende 4 aufgrund von unvermeidlichen Unwuchten z.B. durch Ansatzbildung und Verschleiß im Betrieb des Rotors 2 Auslenkungen um seinen Drehpunkt D am Lager 3 erfährt.

Ferner ist es von Vorteil und daher bevorzugt, wenn ein Rotorendkörper, der die Rotorstirnseite 5 enthält und beispielsweise durch die Trennvorrichtung 15 oder einen beschaufelten Rotorkörper gebildet ist, einen Austragsraum 20 enthält, der frei von Einbauten ist.

Statt einer Mühle kann die Maschine auch ein Windsichter sein, bei dem der Rotor ein beschaufeltes Sichterrad enthält, das am freien Rotorende gebildet oder angeordnet ist und die Rotorstirnseite enthält. Die allgemeinen Ausgestaltungen eines Windsichters sowie dessen erfindungsgemäße Spezifikationen sind für den Fachmann anhand der vorstehenden Erläuterungen der ersten bis vierten Ausführungsbeispiele ohne weiteres möglich, so dass gesonderte Erläuterungen durch grafische Darstellungen und entsprechende Beschreibungen weggelassen werden. Analog zur Mühle kann auch beim Windsichter mit Vorteil und daher bevorzugt ein Rotorendkörper, der die Rotorstirnseite enthält und durch das beschaufelte Sichterrad gebildet ist, einen Austragsraum enthalten, der frei von Einbauten ist.

Es ist bevorzugt, wenn der Spalt 8 bei ruhendem Rotor zumindest an der Mitte M der Rotorstirnseite 5 gemessen eine Breite von kleiner oder gleich 1 mm, insbesondere von kleiner oder gleich 0,5 mm hat.

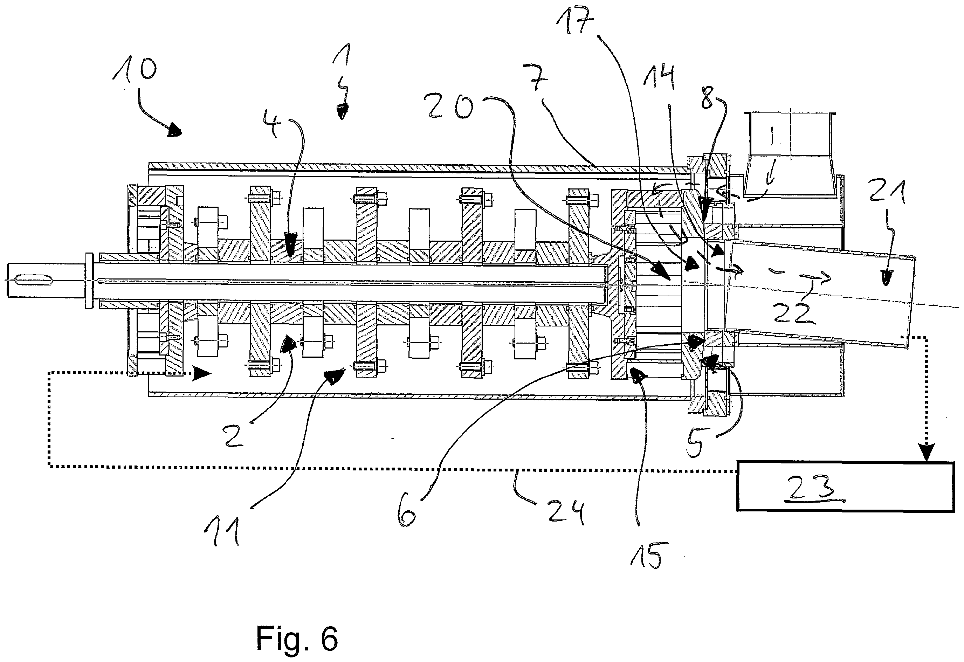

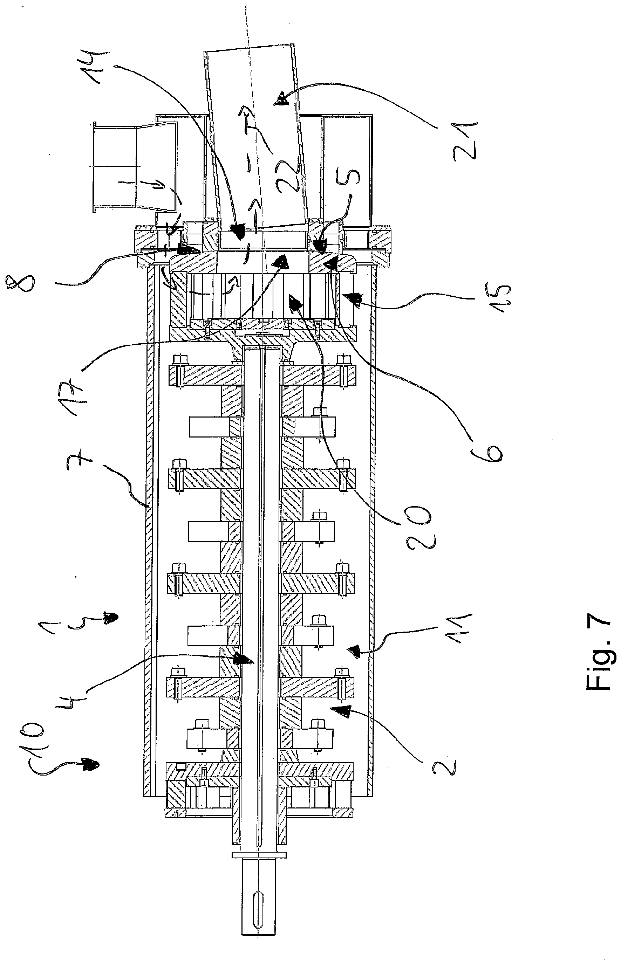

In den Fig. 6 und 7 sind noch zwei Ausführungsbeispiele gezeigt, die noch weiteren Aspekten Rechnung tragen.

Bei dem in den Fig. 6 und 7 schematisch gezeigten fünften und sechsten Ausführungsbeispiele einer Maschine 1 mit einem fliegend gelagerten Rotor 2 sind gleiche Komponenten wie bei den ersten bis vierten Ausführungsbeispielen gemäß den Fig. 1 bis 5 mit denselben Bezugszeichen versehen und werden, soweit sie identisch sind, zur Vermeidung von bloßen Wiederholungen im Zusammenhang mit den Fig. 6 und 7 nicht nochmals beschrieben. Es wird insofern vollumfänglich auf die Beschreibungen zu den Fig. 1 bis 5 Bezug genommen und Einzelheiten der fünften und sechsten Ausführungsbeispiele gemäß den Fig. 6 und 7 werden nachfolgend nur erläutert, sofern und soweit sie sich von den ersten bis vierten Ausführungsbeispielen gemäß den Fig. 1 bis 5 unterscheiden.

Die Rührwerkskugelmühle 10 als Beispiel einer Maschine 1 beim fünften Ausführungsbeispiel gemäß der Fig. 6 hat wie die Rührwerkskugelmühle 10 des vierten Ausführungsbeispiels gemäß den Fig. 4 und 5 einen Rotorendkörper, der die Rotorstirnseite 5 enthält und durch die Trennvorrichtung 15 gebildet ist sowie einen Austragsraum 20 enthält, der frei von Einbauten ist. Ferner wird der Austragsraum 20 von einem Austragsgas durchströmt, wie durch Pfeile 22 symbolisiert wird. Ferner mündet der Austragsraum 20 durch die Materialauslassöffnung 14 in einen Austragsstutzen 21 für gemahlenes Gut, der gegenüber der Horizontalen um 2° bis 15°, vorzugsweise 3° bis 10°, insbesondere bevorzugt 4° bis 6° nach unten geneigt ist.

Hintergrund ist, dass während des An- und Abfahrens der Rührwerkskugelmühle 10 wegen fehlender Fliehkräfte Mahlkörper (nicht gezeigt) in das Innere des Austragsraums 20 in der Mahlkörpertrennvorrichtung oder allgemein Trennvorrichtung 15 gelangen können. Mit dem Austragsgas werden diese Mahlkörper (nicht gezeigt) aus dem Inneren des Austragsraums 20 durch die Materialauslassöffnung 14 in den Austragsstutzen 21 geleitet, von dem aus sie wegen seiner Neigung nach unten in eine Mahlkörperfalle 23 gelangen, von der aus sie in den Bearbeitungsraum 11 zurückgeführt werden, wie durch die gestrichelte Linie 24 symbolisiert wird.

Der Unterschied des sechsten Ausführungsbeispiels gemäß der Fig. 7 zum fünften Ausführungsbeispiel gemäß der Fig. 6 besteht darin, dass bei dem sechsten Ausführungsbeispiel gemäß der Fig. 7 der Austragsstutzen 21 für gemahlenes Gut gegenüber der Horizontalen um 2° bis 15°, vorzugsweise 3° bis 10°, insbesondere bevorzugt 4° bis 6° nach oben statt nach unten geneigt ist. Damit kann eine Mahlkörperfalle 23 und eine Rückführung über einen Weg gemäß der gestrichelten Linie 24 entfallen, da die eventuell in den nach oben geneigten Austragsstutzen 21 gelangten Mahlkörper (nicht gezeigt) beim Abfahren der Rührwerkskugelmühle 10 zurück in den Austragsraum 20 rollen, von wo sie beim erneuten Anfahren der Rührwerkskugelmühle 10 automatisch durch die Fliehkraft wieder in den Bearbeitungsraum 11 zurückgeführt werden.

**Bezugszeichenliste**

| | |
|---|---|
| 1 | Maschine |
| 2 | Rotor |
| 3 | Lager |
| 4 | freies Rotorende |
| 5 | freie Rotorstirnseite |
| 6 | feststehende Rotorgegenseite |
| 7 | Gehäuse oder Stator |
| 8 | Spalt |
| 9 | Randbereich |
| 10 | Mühle, insbesondere eine Rührwerkskugelmühle |
| 11 | Bearbeitungsraum |
| 12 | Mahlguteinlass |
| 13 | Antriebseinrichtungen |
| 14 | Materialauslassöffnung |
| 15 | Trennvorrichtung, insbesondere Mahlkörpertrennvorrichtung |
| 16 | Stirnringfläche |
| 17 | Stirndurchlassöffnung |
| 18 | Gegenringfläche |
| 19 | Einrichtungen zum Spülen |
| 20 | Austragsraum |
| 21 | Austragsstutzen |
| 22 | Pfeile für Austragsgas |
| 23 | Mahlkörperfalle |
| 24 | gestrichelte Linie Rückführung Mahlkörper |
| A | Rotationsachse des Rotors |
| D | Drehpunkt des freien Rotorendes |
| M | Mitte der Rotorstirnseite |
| R | Rand der Rotorstirnseite |
| l | Länge des freien Rotorendes vom Lager zur Mitte der Rotorstirnseite |
| d | Durchmesser der Rotorstirnseite am freien Rotorende |
| $d_1$ | effektiver Durchmesser der Rotorstirnseite bei Auslenkung |
| t | effektive Länge des freien Rotorendes vom Lager zum Rand der Rotorstirnseite |
| s | Spaltweite oder -breite zwischen der Rotorstirnseite und der Rotorgegenseite |

**Patentansprüche**

1. Maschine (1) mit einem an einem Lager (3) fliegend gelagerten Rotor (2), der eine Rotationsachse (A) hat, längs der vom Lager (3) ausgehend ein freies, im Weiteren ungelagertes Rotorende (4) verläuft,

    - das eine Rotorstirnseite (5) aufweist, die durch einen Spalt (8) von einer feststehenden Rotorgegenseite (6) der Maschine (1) beabstandet ist, und
    - das im Betrieb der Maschine (1) bei rotierendem Rotor (2) bedingt durch Unwuchten des fliegend gelagerten Rotors (2), insbesondere des freien ungelagerten Rotorendes (4), oder durch von außen eingeleitete Kräfte gegenüber der Rotationsachse (A) ausgelenkt wird,

> wobei die Rotorstirnseite (5) zumindest in ihrem Randbereich (9) zu ihrem Rand (R) und in Richtung zum Lager (3) hin abfallend gekrümmt oder abgeschrägt ist,
> und wobei Einrichtungen (19) zum Spülen des Spalts (8) mit einem gasförmigen Fluid enthalten sind.

**2.** Maschine (1) nach Anspruch 1,

> **dadurch gekennzeichnet,**
> **dass** die Rotorgegenseite (6) Bestandteil eines Gehäuses (7) ist.

**3.** Maschine (1) nach Anspruch 1 oder 2,

> **dadurch gekennzeichnet,**
> **dass** die Rotorgegenseite (6) eine Materialauslassöffnung (14) gegenüber der Rotorstirnseite (5) enthält, und
> **dass** der Spalt (8) zwischen der Rotorstirnseite (5) und der Rotorgegenseite (6) in der Umgebung der Materialauslassöffnung (14) ein Dichtspalt ist.

**4.** Maschine (1) nach einem der vorhergehenden Ansprüche,

> **dadurch gekennzeichnet,**
> **dass** die Rotorstirnseite (5) kegelstumpf-, kegel- oder kalottenförmig ausgebildet ist.

**5.** Maschine (1) nach einem der vorhergehenden Ansprüche,

> **dadurch gekennzeichnet,**
> **dass** die Rotorgegenseite (6) analog zur Rotorstirnseite (5) so geformt ist, so dass der Spalt (8) zumindest im Wesentlichen eine konstante Breite s hat, insbesondere auch dann, wenn das ungelagerte freie Rotorende (4) im Betrieb der Maschine (1) bei rotierendem Rotor (2) bedingt durch von Unwuchten des fliegend gelagerten Rotors (2), insbesondere des freien ungelagerten Rotorendes (4), oder durch von außen eingeleitete Kräfte gegenüber der Rotationsachse (A) ausgelenkt wird.

**6.** Maschine (1) nach einem der Ansprüche 1 bis 4,

> **dadurch gekennzeichnet,**
> **dass** der Spalt (8) am Rand (R) der Rotorstirnseite (5) bei ruhendem Rotor (2) eine größere Breite als an der Mitte (M) der Rotorstirnseite (5) hat.

**7.** Maschine (1) nach einem der Ansprüche 1 bis 3,

> **dadurch gekennzeichnet,**
> **dass** die Rotorstirnseite (5) konvex sphärisch ausgebildet ist,
> **dass** das freie Rotorende (4) bei ruhendem Rotor (2) vom Lager (3) aus bis zur Mitte (M) der Rotorstirnseite (5) gemessen eine freie axiale Länge 1 hat, und
> **dass** die konvex sphärische Rotorstirnseite (5) einen Radius hat, der gleich der freien axialen Länge 1 des freien Rotorendes (4) ist.

**8.** Maschine (1) nach einem der Ansprüche 1 bis 3,

> **dadurch gekennzeichnet,**
> **dass** die Rotorstirnseite (5) konvex sphärisch ausgebildet ist, und
> **dass** die konvex sphärische Rotorstirnseite (5) am Rand (R) einen kleineren Radius als in der Mitte (M) hat.

**9.** Maschine (1) nach Anspruch 7 oder 8,

> **dadurch gekennzeichnet,**
> **dass** die der Rotorstirnseite (5) gegenüberliegende Rotorgegenseite (6) konkav sphärisch ausgebildet ist.

**10.** Maschine (1) nach Anspruch 9,

> **dadurch gekennzeichnet,**
> **dass** das freie Rotorende (4) bei ruhendem Rotor (2) vom Lager (3) aus bis zur Mitte (M) der Rotorstirnseite (5) gemessen eine freie axiale Länge 1 hat, und
> **dass** die konkav sphärische Rotorgegenseite (6) einen Radius hat, der gleich der freien axialen Länge 1 zuzüglich der Breite s des Spalts (8) bei ruhendem Rotor (2) an der Mitte (M) der Rotorstirnseite (5) gemessen ist.

**11.** Maschine (1) nach Anspruch 9,

> **dadurch gekennzeichnet,**
> **dass** das freie Rotorende (4) bei ruhendem Rotor (2) vom Lager (3) aus bis zur Mitte (M) der Rotorstirnseite (5) gemessen eine freie axiale Länge 1 hat, und
> **dass** der Radius der konkav sphärischen Rotorgegenseite (6) zumindest gegenüber einem Randbereich (9) der Rotorstirnseite (5) größer als die freie axiale Länge 1 zuzüglich der Breite s des Spalts (8) bei ruhendem Rotor (2) an der Mitte (M) der Rotorstirnseite (5) gemessen ist.

**12.** Maschine (1) nach einem der vorhergehenden Ansprüche,

> **dadurch gekennzeichnet,**
> **dass** sie ein Windsichter ist,
> **dass** der Rotor (2) als Rotorendkörper ein beschaufeltes Sichterrad enthält, und dass das Sichterrad am freien Rotorende (4) gebildet oder angeordnet ist und die Rotorstirnseite (5) enthält.

**13.** Maschine (1) nach einem der Ansprüche 1 bis 11,

> **dadurch gekennzeichnet,**
> **dass** sie eine Mühle, insbesondere eine Rührwerkskugelmühle (10) ist,
> **dass** der Rotor (2) als Rotorendkörper eine Trennvorrichtung (15), insbesondere eine Mahlkörpertrennvorrichtung, einen beschaufelten Rotorkörper oder eine Mahlkörpertrennvorrichtung und einen beschaufelten Rotorkörper enthält, und
> **dass** die Trennvorrichtung (15) oder Mahlkörpertrennvorrichtung oder der beschaufelte Rotorkörper am freien Rotorende (4) gebildet oder angeordnet ist und die Rotorstirnseite (5) enthält.

**14.** Maschine (1) nach Anspruch 13 in Verbindung mit Anspruch 3,

> **dadurch gekennzeichnet,**
> **dass** die Mahlkörpertrennvorrichtung einen Austragsraum (20) enthält, der von einem Austragsgas durchströmt wird und durch die Materialauslassöffnung (14) in einen Austragsstutzen (21) für gemahlenes Gut mündet, der gegenüber der Horizontalen um 2° bis 15°, vorzugsweise 3° bis 10°, insbesondere bevorzugt 4° bis 6° nach oben oder unten geneigt ist.

**15.** Maschine (1) nach einem der Ansprüche 12 bis 14,

> **dadurch gekennzeichnet,**
> **dass** der Rotorendkörper einen Austragsraum (20) enthält, der frei von Einbauten ist.

**16.** Maschine (1) nach einem der vorhergehenden Ansprüche,

> **dadurch gekennzeichnet,**
> **dass** der Spalt (8) bei ruhendem Rotor an der Mitte (M) der Rotorstirnseite (5) gemessen eine Breite von kleiner oder gleich 1 mm, insbesondere von kleiner oder gleich 0,5 mm hat.

**Claims**

**1.** Machine (1) having a rotor (2), which is mounted cantilevered on a bearing (3) and which has an axis of rotation (A) along which, proceeding from the bearing (3), there extends a free, otherwise unmounted rotor end (4),

- which has a rotor end face (5), spaced apart from a stationary rotor counter face (6) of the machine (1) by a gap (8), and
- which during operation of the machine (1), when the rotor (2) is rotating, is deflected with respect to the axis of rotation (A) as a result of unbalances of the rotor (2) which is mounted cantilevered, in particular of the free, unmounted rotor end (4), or as a result of externally introduced forces,

wherein the rotor end face (5) is curved or chamfered, at least in the edge region (9) thereof, so as to fall away towards the edge (R) thereof and in the direction of the bearing (3), and
wherein devices (19) for rinsing the gap (8) with a gaseous fluid are included.

2. Machine (1) according to claim 1,

**characterised**
**in that** the rotor counter face (6) is part of a housing (7).

3. Machine (1) according to either claim 1 or claim 2,

**characterised**
**in that** the rotor counter face (6) includes a material outlet opening (14) opposite the rotor end face (5), and in that the gap (8) between the rotor end face (5) and the rotor counter face (6) in the neighbourhood of the material outlet opening (14) is a sealed gap.

4. Machine (1) according to any of the preceding claims,

**characterised**
**in that** the rotor end face (5) is formed frustum-shaped, conical or dome-shaped.

5. Machine (1) according to any of the preceding claims,

**characterised**
**in that** the rotor counter face (6) is shaped, analogously to the rotor end face (5), in such a way that the gap (8) is at least substantially of a constant width s, in particular even when, during operation of the machine (1), when the rotor (2) is rotating, the unmounted free rotor end (4) is deflected with respect to the axis of rotation (A) as a result of unbalances of the rotor (2) which is mounted cantilevered, in particular of the free, unmounted rotor end (4), or as a result of externally introduced forces.

6. Machine (1) according to any of claims 1 to 4,

**characterised**
**in that** the gap (8) has a greater width at the edge (R) of the rotor end face (5), when the rotor (2) is stationary, than at the centre (M) of the rotor end face (5).

7. Machine (1) according to any of claims 1 to 3,

**characterised**
**in that** the rotor end face (5) is formed convexly spherical, in that the free rotor end (4), when the rotor (2) is stationary, has a free axial length 1 as measured from the bearing (3) to the centre (M) of the rotor end face (5), and in that the convexly spherical rotor end face (5) has a radius equal to the free axial length 1 of the free rotor end (4).

8. Machine (1) according to any of claims 1 to 3,

**characterised**
**in that** the rotor end face (5) is formed convexly spherical, and
**in that** the convexly spherical rotor end face (5) has a smaller radius at the edge (R) than at the centre (M).

9. Machine (1) according to either claim 7 or claim 8,

**characterised**

**in that** the rotor counter face (6) opposite the rotor end face (5) is formed concavely spherical.

10. Machine (1) according to claim 9,

**characterised**

**in that** the free rotor end (4), when the rotor (2) is stationary, has a free axial length 1 as measured from the bearing (3) to the centre (M) of the rotor end face (5), and in that the concavely spherical rotor counter face (6) has a radius equal to the free axial length 1 plus the width s of the gap (8), when the rotor is stationary (2), as measured at the centre (M) of the rotor end face (5).

11. Machine (1) according to claim 9,

**characterised**

**in that** the free rotor end (4), when the rotor (2) is stationary, has a free axial length 1 as measured from the bearing (3) to the centre (M) of the rotor end face (5), and in that the radius of the concavely spherical rotor counter face (6), at least opposite an edge region (9) of the rotor end face (5), is greater than the free axial length 1 plus the width s of the gap (8), when the rotor (2) is stationary, as measured at the centre (M) of the rotor end face (5).

12. Machine (1) according to any of the preceding claims,

**characterised**

**in that** it is a wind sifter,
**in that** the rotor (2) includes a bladed sifter wheel as a rotor end body, and
**in that** the sifter wheel is formed or arranged at the free rotor end (4) and includes the rotor end face (5).

13. Machine (1) according to any of claims 1 to 11

**characterised**

**in that** it is a mill, in particular an agitator bead mill (10),
**in that** the rotor (2) includes, as a rotor end body, a separation device (15), in particular a grinding body separation device, a bladed rotor body, or a grinding body separation device and a bladed rotor body, and
**in that** the separation device (15) or grinding body separation device or the bladed rotor body is formed or arranged at the free rotor end (4) and includes the rotor end face (5).

14. Machine (1) according to claim 13 in conjunction with claim 3,

**characterised**

**in that** the grinding body separation device includes a discharge chamber (20) which is flowed through by a discharge gas and through which the material outlet opening (14) opens into a discharge connector (21) for ground material, said connector being at an upward or downward inclination to the horizontal of 2° to 15°, preferably 3° to 10°, particularly preferably 4° to 6°.

15. Machine (1) according to any of claims 12 to 14

**characterised**

**in that** the rotor end body includes a discharge chamber (20) which is free of fittings.

16. Machine (1) according to any of the preceding claims,

**characterised**

**in that** the gap (8), when the rotor is stationary, as measured at the centre (M) of the rotor end face (5) has a width less than or equal to 1 mm, in particular less than or equal to 0.5 mm.

**Revendications**

1.  Machine (1) dotée d'un rotor (2) qui est monté en porte-à-faux sur un palier (3) et qui présente un axe de rotation (A) le long duquel s'étend, à partir du palier (3), une extrémité de rotor (4) libre, non supportée par ailleurs,

    - qui présente une face frontale de rotor (5) qui est espacée d'une face opposée de rotor fixe (6) de la machine (1) par une fente (8) et
    - qui, pendant le fonctionnement de la machine (1), avec le rotor (2) en rotation, est déviée par rapport à l'axe de rotation (A) en raison de déséquilibres du rotor monté en porte-à-faux (2), en particulier de l'extrémité de rotor (4) libre non supportée, ou en raison de forces introduites de l'extérieur,

    dans laquelle la face frontale de rotor (5) est incurvée ou chanfreinée au moins dans sa zone de bord (9) vers son bord (R) et en descendant en direction du palier (3),
    et dans laquelle des moyens (19) pour rincer la fente (8) avec un fluide gazeux sont inclus.

2.  Machine (1) selon la revendication 1,

    **caractérisée en ce**
    **que** la face opposée de rotor (6) fait partie d'un carter (7) .

3.  Machine (1) selon la revendication 1 ou 2,

    **caractérisée en ce**
    **que** la face opposée de rotor (6) contient une ouverture de sortie de matière (14) opposée à la face frontale de rotor (5), et
    **que** la fente (8) entre la face frontale de rotor (5) et la face opposée de rotor (6) au voisinage de l'ouverture de sortie de matière (14) est une fente d'étanchéité.

4.  Machine (1) selon l'une des revendications précédentes,

    **caractérisée en ce**
    **que** la face frontale de rotor (5) est tronconique, conique ou en forme de calotte.

5.  Machine (1) selon l'une des revendications précédentes,

    **caractérisée en ce**
    **que** la face opposée de rotor (6) est formée de manière analogue à la face frontale de rotor (5) de telle sorte que la fente (8) présente au moins sensiblement une largeur s constante, en particulier également lorsque l'extrémité de rotor (4) libre non supportée est déviée par rapport à l'axe de rotation (A) pendant le fonctionnement de la machine (1) avec le rotor (2) en rotation en raison de déséquilibres du rotor monté en porte-à-faux (2), en particulier de l'extrémité de rotor (4) libre non supportée, ou en raison de forces introduites de l'extérieur.

6.  Machine (1) selon l'une des revendications 1 à 4,

    **caractérisée en ce**
    **que** la fente (8) a, lorsque le rotor (2) est au repos, une plus grande largeur au bord (R) de la face frontale de rotor (5) qu'au milieu (M) de la face frontale de rotor (5).

7.  Machine (1) selon l'une des revendications 1 à 3,

    **caractérisée en ce**
    **que** la face frontale de rotor (5) est sphérique convexe, que l'extrémité de rotor (4) libre a, lorsque le rotor (2) est au repos, une longueur axiale libre 1 mesurée du palier (3) au milieu (M) de la face frontale de rotor (5), et que la face frontale de rotor sphérique convexe (5) a un rayon qui est égal à la longueur axiale libre 1 de l'extrémité de rotor (4) libre.

8.  Machine (1) selon l'une des revendications 1 à 3,

**caractérisée en ce**
**que** la face frontale de rotor (5) est sphérique convexe, et que la face frontale de rotor sphérique convexe (5) a un rayon plus petit au bord (R) qu'au milieu (M).

9. Machine (1) selon la revendication 7 ou 8,

**caractérisée en ce**
**que** la face opposée de rotor (6) située en face de la face frontale de rotor (5), est sphérique concave.

10. Machine (1) selon la revendication 9,

**caractérisée en ce**
**que** l'extrémité de rotor libre (4) a, lorsque le rotor (2) est au repos, une longueur axiale libre 1 mesurée du palier (3) au milieu (M) de la face frontale de rotor (5), et que la face opposée de rotor sphérique concave (6) a un rayon qui est égal à la longueur axiale libre 1 plus la largeur s de la fente (8) mesurée au milieu (M) de la face frontale de rotor (5) lorsque le rotor (2) est au repos.

11. Machine (1) selon la revendication 9,

**caractérisée en ce**
**que** l'extrémité de rotor (4) libre a lorsque le rotor (2) est au repos, une longueur axiale libre 1 mesurée du palier (3) au milieu (M) de la face frontale de rotor (5), et que le rayon de la face opposée de rotor sphérique concave (6) est, au moins par rapport à une zone de bord (9) de la face frontale de rotor (5), plus grand que la longueur axiale libre 1 plus la largeur s de la fente (8) mesurée au milieu (M) de la face frontale de rotor (5) lorsque le rotor (2) est au repos.

12. Machine (1) selon l'une des revendications précédentes,

**caractérisée en ce**
**qu'**il s'agit d'un séparateur à air,
**que** le rotor (2) contient, en tant que corps d'extrémité de rotor, une roue de séparateur à aubes, et
**que** la roue de séparateur est formée ou disposée à l'extrémité de rotor (4) libre et contient la face frontale de rotor (5).

13. Machine (1) selon l'une des revendications 1 à 11,

**caractérisée en ce**
**qu'**il s'agit d'un broyeur, en particulier d'un broyeur à boulets à agitateur (10),
**que** le rotor (2) contient, en tant que corps d'extrémité de rotor, un dispositif de séparation (15), en particulier un dispositif de séparation à éléments broyeurs, un corps de rotor à aubes ou un dispositif de séparation à éléments broyeurs et un corps de rotor à aubes, et
**que** le dispositif de séparation (15) ou le dispositif de séparation à éléments broyeurs ou le corps de rotor à aubes est formé ou disposé à l'extrémité de rotor (4) libre et contient la face frontale de rotor (5).

14. Machine (1) selon la revendication 13 en liaison avec la revendication 3,

**caractérisée en ce**
**que** le dispositif de séparation à éléments broyeurs contient une chambre de décharge (20) traversée par un gaz de décharge et débouchant, par l'ouverture de sortie de matière (14), dans une tubulure de décharge (21) pour la matière broyée, qui est inclinée vers le haut ou vers le bas par rapport à l'horizontale de 2° à 15°, de préférence de 3° à 10°, de manière particulièrement préférée de 4° à 6°.

15. Machine (1) selon l'une des revendications 12 à 14,

**caractérisée en ce**
**que** le corps d'extrémité de rotor comprend une chambre de décharge (20) qui est exempte d'éléments internes.

16. Machine (1) selon l'une des revendications précédentes,

**caractérisée en ce**
**que** la fente (8) a, lorsque le rotor est au repos, une largeur inférieure ou égale à 1 mm, en particulier inférieure ou égale à 0,5 mm, mesurée au milieu (M) de la face frontale de rotor (5).

Fig. 1

EP 2 886 211 B1

Fig. 2

EP 2 886 211 B1

Fig. 3

EP 2 886 211 B1

Fig. 4

Fig. 5

Fig. 6

Fig. 7

Fig. 8

Stand der Technik

EP 2 886 211 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0504836 A1